Europäisches Patentamt

European Patent Office

Office européen des brevets

(11) Publication number: **0 070 581**

**B1**

(12) **EUROPEAN PATENT SPECIFICATION**

(45) Date of publication of patent specification: **25.09.85**

(51) Int. Cl.⁴: $C\ 05\ C\ 1/02$

(21) Application number: **82200765.4**

(22) Date of filing: **19.06.82**

(54) **Process for preparing thermally stable ammonium nitrate-containing granules of high bulk density.**

(30) Priority: **19.06.81 NL 8102958**

(43) Date of publication of application:
**26.01.83 Bulletin 83/04**

(45) Publication of the grant of the patent:
**25.09.85 Bulletin 85/39**

(84) Designated Contracting States:
**AT BE DE FR GB IT NL SE**

(56) References cited:
**DE-B-1 012 313**
**FR-A-1 309 248**
**FR-A-2 006 042**
**FR-A-2 076 915**
**FR-A-2 451 351**
**GB-A-1 136 019**
**GB-A-1 174 811**
**NL-A-6 709 519**
**US-A-3 379 496**

**The file contains technical information
submitted after the application was filed and
not included in this specification**

(73) Proprietor: **UNIE VAN KUNSTMESTFABRIEKEN
B.V.
Maliebaan 81
NL-3581 CG Utrecht (NL)**

(72) Inventor: **Mutsers, Stanislaus Martinus Petrus
Eindstraat 9
NL-6166 EH Geleen (NL)**
Inventor: **Hoek, Cornelis
R. v. Gelrestraat 38
NL-6118 AD Nieuwstadt (NL)**
Inventor: **Wagemans, Gerardus Mathias
Cornelis
Dopheide 8
NL-6081 CC Haelen (NL)**

(74) Representative: **Roeffen, Wilhelmus Johannes
Maria et al
OCTROOIBUREAU DSM Postbus 9
NL-6160 MA Geleen (NL)**

Courier Press, Leamington Spa, England.

## Description

The invention relates to a process for preparing thermally stable ammoniumnitrate-containing granules of high bulk density, on the basis of a liquid composition containing a stabilization agent and ammoniumnitrate.

A process of this kind is already known, for instance from US Patent Specification No. 3,379,496, and UK Patent Specification No. 1,136,019. These describe the granulation by the so-called prilling method of practically water-free ammoniumnitrate melts containing as stabilizer a finely divided clay, or magnesiumnitrate and/or calciumnitrate, respectively.

It is a disadvantage of these known processes that prilling restricts the maximum particle size of the product. For instance, the preparation of granules having a diameter of more than, say, 3 mm requires the use of very high prilling towers or extremely forced cooling of the falling drops. In view of the increasing demand for larger-diameter granules (especially for application in so-called bulk blends), and of the need for processes showing high flexibility as regards product particle size (e.g. up to 6 mm), a prilling process is less attractive therefore. Another disadvantage of these processes is that for obtaining high-density granules it is necessary to use practically water-free melts.

A process capable of yielding an ammoniumnitrate product with a larger particle size is known from US Patent No. 4.316.736. According to this process an ammoniumnitrate solution containing at most 20% by weight (in particular 5—10% wt.) water and 0.5—3% wt. magnesiumnitrate is sprayed onto solid seed particles kept separate from each other and contacted with a hot current of gas, these particles having a temperature of between 120 and 135°C. In order that thermally stable granules may be obtained it is necessary to cool the granules at such a slow rate that they remain virtually homogeneous in temperature in the range between 70 and 50°C.

A disadvantage of this known process is that the finished product has rather a high water content (about 0.3% wt.). Granules having such a high water content show increased caking tendency and poorer hygroscopic behaviour upon storage, which in general makes it necessary to apply rather a large quantity of coating agent to them. In addition, such a product can hardly be stored or shipped in bulk, and closed bags have to be used instead.

Another disadvantage of this process is that the granules need to be cooled slowly in the 70→50°C range, so that for a given quantity of product a relatively big cooling unit is needed. Further, this cooling method requires the use of several, in general three, discrete cooling stages (one cooling down to 70°C, one for the 70→50°C range, and one cooling below 50°C). Finally, this known process has the disadvantage that its flexibility, e.g. in terms of the quantity of recycle material, and hence of production capacity, is limited by the narrow temperature range mandatory for the bed of seed particles.

The invention provides a process which avoids the abovementioned disadvantages completely or almost completely.

According to the invention, this is achieved in that an ammoniumnitrate-containing liquid composition including at most 15% wt. water, 0.3—3.5% wt. calciumnitrate and 0.5—5% wt. of a finely divided material which contains silica and is insoluble in and chemically inert relative to ammoniumnitrate, calculated in relation to the quantity of ammoniumnitrate, is sprayed into a fluidised bed of ammoniumnitrate-containing seed particles which are kept separate from each other and are contacted with a gas current, and which have a temperature of between 95 and 145°C, after which the resulting granules are discharged from the bed.

With the process according to the invention a granular product is obtained which, on the one hand, possesses high thermal stability and a high bulk density (>950 g/l), and, on the other hand, has an extremely low water content (<0.1% wt., more in particular ≤0.05% wt.), and in addition has excellent impact resistance and crushing strength, hardly cakes together, and hardly shows hygroscopicity.

In addition, it proves unnecessary with the present process to apply slow cooling—as described in US Patent No. 4.316.736—in the range between 70 and 50°C. Use can therefore be made of a rapid cooling method, for instance fluid-bed cooling, which brings an economization in cooling equipment. All the more so, as it has been found that rapid cooling of the granules results in a product of increased bulk density.

The process according to the invention may start from a practically water-free ammoniumnitrate melt, as well as from an ammoniumnitrate-containing solution.

If a liquid composition of high water content, e.g. over 5% wt., in particular 5—10% wt., is sprayed, a bed temperature of over 115°C, by preference 120—140°C, is applied. An advantage of this mode of realizing the invention is that use can be made of a less concentrated feed, which means a saving as regards the cost of evaporation. If use is made of a liquid composition having a low water content, e.g. lower than 3% wt., in particular lower than 1% wt., a high bed temperature may be applied as well as a low. In such a case use is made by preference of a bed temperature of between 95 and 115°C, more in particular 100—110°C, because it is then unnecessary to preheat the fluidization gas.

Preferably, the amount of calciumnitrate contained in the liquid composition is 0.5—1.0% by weight, calculated in relation to the quantity of ammoniumnitrate. The calciumnitrate can be added as such to the ammoniumnitrate-containing solution or melt. It is also possible to add calcium oxide, or a calcium salt reacting in situ while forming calciumnitrate, to the nitric acid used for the preparation of ammoniumnitrate or to the ammoniumnitrate obtained therefrom after ammoniation and, possibly, evaporation.

In carrying out the process according to the invention preferably use is made of a silica-containing clay having a particle size smaller than 10 micrometer, in particular smaller than 5 micrometer. Such products have been described, i.a. in US Patent Specification No. 3,379,496. This material may be added to the ammoniumnitrate-containing melt as well as to the solution before this is subjected to evaporation. By preference use is made of 1.5—2.5% wt. of the silica-containing material, calculated in relation to the ammoniumnitrate.

The temperature of the composition to be sprayed may be varied. By preference a temperature is applied that is at least 5°C above the crystallization temperature of the composition. In general, the maximum temperature should be lower than that at which the composition boils at atmospheric pressure. For safety reasons, temperatures above about 180°C are avoided. For instance, if use is made of a 95% solution, a temperature of between 125 and 170°C, and with a 99.5% solution a temperature of between 165 and 180°C is applied.

The solution is sprayed in a known way onto the bed, e.g. by means of a single-phase spray, or, by preference, with a strong current of a hot gas into the bed, for instance by means of a two-phase spray. The spraying gas (air) is given a temperature that is about equal to or slightly lower than the temperature of the composition to be sprayed. The quantity of spraying gas may vary. By preference such an amount of gas is applied that in the spraying unit the gas-to-liquid composition mass ratio is about 1:1 to 1:4.

The bed of seeds that are kept separate from each other in contact with a gas current may be a fluidized bed or a spouted bed, as well as a bed of seeds obtained by application of the so-called spherodizer technique. The process has special application to fluid-bed granulation. The fluidization gas is applied in particular in the form of a current of air passing through the bed of seeds from bottom to top, and the liquid ammoniumnitrate-containing composition is preferably sprayed from the bottom upward into this bed.

The amount of fluidization gas may vary, but should be at least so large and have such a velocity that all seed particles in the bed are kept fluidized. By preference, the superficial velocity of the fluidized gas is twice the minimum fluidization velocity. (The term 'minimum fluidization velocity' should be understood as meaning the minimum velocity sufficing to support the weight of the seed particles in the bed. For ammoniumnitrate with a mean particle size of 3 mm it is about 1.2 m/sec). Of course, the velocity of the fluidization gas must be smaller than that which would cause individual seed particles to be blown out of the bed.

The temperature of the fluidization gas may vary, for instance between 20 and 170°C. In general, such a temperature is applied that in combination with the temperature of the seeds and their quantity, the desired bed temperature is established.

The seeds may, in principle, consist of any ammoniumnitrate particles that contain calciumnitrate and a stabilization agent. By preference, use is made of granules obtained by processing product from the bed. Such product is screened in a known way, optionally after cooling, and the oversize granules are crushed, after which these are advantageously returned to the bed as seed particles together with the undersize granules. In dependence on the amount of seeds needed, part of the granules may be recycled, if so desired, the rest being, for instance, added to the liquid ammoniumnitrate feed, either direct or after melting. Should there be too small an amount of granules for recycling, it is possible also to return part of the product granules, after crushing if necessary.

The amount of recycle material may vary. It has been found that in the present process it is always sufficient to work with a quantity equal to the amount of the liquid composition fed in. By preference such a quantity of recycle material is used that the weight ratio of recycle material to liquid composition is about 1:1 to 1:2.

The size of the seeds introduced into the bed may likewise vary. By preference the mean diameter of the seeds is between 0.75 and 2.0 mm.

The height of the bed may vary. In the case of a fluidized bed a height of 0.5—1 m is mostly taken.

The temperature of the seeds in the bed (95—145°C) is controlled with the aid of the temperature of the gas which is passed through and that of the seeds fed in (=recycle material).

If a bed temperature in the higher part of the range between 95 and 145° is wanted, for instance 120—140°C, it is preferably to preheat the gas to be passed through and/or not to cool the granules discharged from the bed before screening, hence also the recycle material. The pre-heating of the gas may be effected through heat exchange with the product granules after screening. An advantage of a high bed temperature, especially when a highly concentrated ammoniumnitrate feed is used, is that its permits of maintaining a better heat balance in the process, as no cooling of the recycle material is required.

If a relatively low bed temperature is wanted, for instance 100—110°C, it is possible, depending on the water content of the ammoniumnitrate feed, to apply relatively cold gas and/or to cool either the granules discharged from the bed, prior to screening, or the material to be recycled.

The granules obtained in the bed are preferably discharged continuously from the bed, for instance via the bottom or via an overflow.

Subsequently the granular product can be screened at once to obtain a fraction with the desired grain sizes and a larger and a smaller fraction, after which the product fraction is cooled down to the ambient temperature. It is also possible first to cool the granules discharged from the bed, for instance down to a temperature between the granulation and the ambient temperature, next to screen, and to further cool the product fraction obtained, if necessary.

The cooling of the granules can be effected by means of several cooling methods known in themselves. By preference, the cooling (of the granules prior to screening, as well as of the product granules after screening) is effected in one or more fluid-bed coolers. As indicated earlier, this offers the advantage that relatively limited cooling equipment is sufficient.

Moreover it has been found that rapid cooling of the granules in the process according to the invention results in product of increased bulk density, while—in contrast with the process according to US Patent No. 4.316.736—no deterioration of the thermal stability occurs.

By preference, conditioned air of ambient temperature or a slightly higher temperature is used as fluidization gas in the fluid-bed cooler(s). The heated air leaving the cooler can advantageously be used as fluidization gas for the bed of seeds.

The air issuing from the bed of seed particles contains, besides water vapour, a small quantity of ammoniumnitrate-containing dust. The latter can be removed in a known way, for instance by washing with water or with a dilute ammoniumnitrate-containing solution which is circulated.

The product granules obtained after screening and cooling can, if desired, be treated further with a coating agent in a known way. The moisture content of the product obtained is so low that a drying stage can be dispensed with. The granules may be subjected further, through,—if desired, before the cooling—to a regular, rolling motion in a rotary drum, so as to effect an additional rise of the bulk density.

Although the present process has special importance for the preparation of ammoniumnitrate granules, it can be used also for preparing granules which contain other components besides ammoniumnitrate, for instance fillers, such as marlstone or dolomite, trace elements, agrochemicals (herbicides, etc.) and fertilizer salts.

The invention will be further elucidated in the following examples.

Example 1

To a circular fluid-bed granulator (diameter 45 cm) with a perforated bottom, containing a bed of $NH_4NO_3$ seed particles (mean diameter 2.95 mm; height of the bed 40 cm) an $NH_4NO_3$ melt was continuously supplied via a two-phase spray by means of a strong air current and sprayed laterally into the bed. To the melt 0.5% wt. of finely divided calciumcarbonate and 2% wt. of a silica-containing clay had been added. The clay used was a product which can be obtained under the name of Sorbolite from Tennessee Mining and Chemical Corp. and contains mainly $SiO_2$ (73%) and $Al_2O_3$ (14%) besides small quantities of $K_2O$, $CuO$, $TiO_2$, $Fe_2O_3$ and $MgO$.

The bed (135°C) was fluidized by means of an upward air current supplied via the bottom plate, via an overflow granules were continuously discharged to a screen and there separated into a fine fraction (<2 mm), a product fraction (2—4 mm) and a coarse fraction (>4 mm). The coarse fraction was crushed on crusher rollers and continuously recycled to the bed together with the fine fraction.

The product fraction was rapidly cooled in a fluid-bed cooler to about 35°C. Part of this product was heated and cooled five times between 15 and 50°C.

The process conditions and the properties of the product obtained and of the product after five cycles are listed in the table below.

Examples 2 through 6

In the same manner as in example 1 a liquid $NH_4NO_3$-containing composition was granulated in a fluidized bed of seed particles. The results are also listed in the table.

| Example Process conditions | 1 | 2 | 3 | 4 | 5 | 6 |
|---|---|---|---|---|---|---|
| Bed temperature (°C) | 135 | 120 | 105 | 128 | 138 | 128 |
| $H_2O$ Content $NH_4NO_3$ feed (% wt.) | 0.42 | 0.42 | 0.42 | 0.54 | 5.29 | 4.80 |
| Temp. of $NH_4NO_3$ feed (°C) | 176 | 173 | 170 | 171 | 145 | 165 |
| Quantity of $NH_4NO_3$ feed (kg/h) | 95 | 95 | 95 | 95 | 49 | 49 |
| Temp. of spraying air (°C) | 161 | 161 | 159 | 158 | 153 | 153 |
| Quantity of spraying air (kg/h) | 80 | 80 | 80 | 75 | 81 | 84 |
| Temp. of fluidization air (°C) | 152 | 122 | 105 | 126 | 140 | 130 |
| Quantity of fluidization air (kg/h) | 1180 | 1180 | 1180 | 1180 | 1180 | 1180 |
| Velocity of fluidization air (m/s) | 2.63 | 2.53 | 2.44 | 2.59 | 2.65 | 2.63 |
| Quantity of $CaCO_3$ (% wt.) | 0.5 | 0.5 | 0.5 | 0.5 | 0.5 | 0.5 |
| Quantity of clay (% wt.) | 2 | 2 | 2 | 2 | 2 | 2 |
| **Product quality** | | | | | | |
| Nitrogen content (% wt.) | 33.80 | 33.85 | 33.70 | 33.80 | 33.80 | 34.00 |
| $H_2O$ Content (% wt.) | 0.02 | 0.05 | 0.05 | 0.05 | 0.10 | 0.07 |
| Bulk density (g/l) | 955 | 955 | 965 | 950 | 946 | 945 |
| Rolling capacity (% round) | 50 | 90 | 60 | 95 | 75 | 70 |
| Impact resistance (%) | 100 | 100 | 100 | 100 | 100 | 100 |
| Crushing strength (bar) | 25 | 65 | 65 | 30 | 40 | 45 |
| Oil-absorption cap. (% wt.) | 0.30 | 0.20 | 0.20 | 0.50 | 0.20 | 0.40 |
| $D_{50}$ (mm) | 2.95 | 3.15 | 3.50 | 3.35 | 2.65 | 2.30 |
| Mercury penetration (cm³/g) | 0.040 | 0.028 | 0.031 | 0.038 | 0.035 | 0.038 |
| **Product after 5 cycles between 15 and 50°C** | | | | | | |
| Crushing strength (bar) | 25 | 45 | 65 | 30 | 40 | 45 |
| Oil-absorption cap. (% wt.) | 0.55 | 0.95 | 0.80 | 0.50 | 0.30 | 0.60 |
| Volume increase (%) | 0 | 5 | 5 | 0 | 2 | 3 |

## Claims

1. Process for preparing thermally stable ammoniumnitrate-containing granules of high bulk density, on the basis of a liquid composition containing a stabilization agent and ammoniumnitrate, this process being characterized in that a liquid ammoniumnitrate-containing composition including at most 15% wt. water, 0.3—3.5% wt. calciumnitrate and 0.5—5% wt. of a finely divided material which contains silica and is insoluble in and chemically inert relative to ammoniumnitrate, calculated in relation to the quantity of ammoniumnitrate, is sprayed into a fluidised bed of ammoniumnitrate-containing seeds which are kept separate from each other and are contacted with a gas current, and which have a temperature of between 95 and 145°C, after which the resulting granules are discharged from the bed.

2. Process according to claim 1, characterized in that an ammoniumnitrate-containing melt including at most 3% wt. water is sprayed.

3. Process according to claim 2, characterized in that a bed temperature of between 95 and 115°C is applied.

4. Process according to one of the claims 1—3, characterized in that an ammoniumnitrate-containing melt including at most 1% wt. water is sprayed and a bed temperature of between 100 and 110°C is applied.

5. Process according to claim 1, characterized in that an ammoniumnitrate-containing solution including more than 5% wt. water is sprayed and a bed temperature higher than 115°C is applied.

6. Process according to claim 5, characterized in that a solution including 5—10% wt. water and a bed temperature of 120—140°C are applied.

7. Process according to any one of the claims 1—6, characterized in that a silica-containing clay with a particle size of less than 10 μm is used.

8. Process according to any one of the claims 1—7, characterized in that an ammonium-nitrate-containing liquid composition is used which includes 0.5—1.0% wt. calciumnitrate and 1.5—2.5% wt. silica-containing material, calculated relative to the quantity of ammoniumnitrate.

9. Process according to any one of the claims 1—8, characterized in that an ammoniumnitrate-containing liquid composition with a temperature at least 5°C higher than the crystallization temperature is sprayed.

10. Process according to any one of claims 1—9, characterized in that the bed is fluidized with air which flows through the bed from bottom to top at a superficial velocity which is about twice the minimum fluidization velocity.

11. Process according to any one of the claims 1—10, characterized in that the ammoniumnitrate-containing liquid composition is sprayed into the bed of seed particles by means of an air current which has a temperature that is about equal to that of the composition, and an air:liquid composition mass ratio of between 1:1 and 1:4 is applied.

12. Process according to any one of the claims 1—11, characterized in that the granules discharged from the bed are rapidly cooled, optionally after screening.

13. Process according to claim 12, characterized in that the cooling is effected in one or more fluid-bed coolers.

14. Process according to claim 13, characterized in that the gas issuing from the fluid-bed cooler is least partly used as gas current in the bed of seed particles.

15. Process according to any one of the claims 1—14 characterized in that the ammoniumnitrate-containing liquid composition to be sprayed also includes one or more fillers, trace elements, agrochemicals and/or fertilizer salts.

**Patentansprüche**

1. Verfahren zur Herstellung von thermisch stabilen, · Ammoniumnitrat · enthaltenden Granulatkörnern mit hoher Schüttdichte, auf der Basis einer flüssigen, ein Stabilisierungsmittel und Ammoniumnitrat enthaltenden Zusammensetzung, dadurch gekennzeichnet, daß eine Ammoniumnitrat enthaltende flüssige Zusammensetzung mit einem Gehalt von höchstens 15 Masse-% Wasser, 0,3—3,5 Masse-% Calciumnitrat und 0,5—5 Masse-% eines feinteiligen Materials, welches Siliciumdioxid enthält und unlöslich in und chemisch inert gegen Ammoniumnitrat ist, bezogen auf die Menge des Ammoniumnitrats, in ein Wirbelbett von Ammoniumnitrat enthaltenden Keimteilchen, welche getrennt voneinander gehalten und mit einem Gasstrom in Kontakt gebracht werden, und welche eine Temperatur zwischen 95 und 145°C habe, versprüht wird, wonach die gebildeten Granulatkörner aus dem Bett ausgetragen werden.

2. Verfahren nach Anspruch 1, dadurch gekennzeichnet, daß eine Ammoniumnitrat enthaltende Schmelze mit einem Wassergehalt von höchstens 3 Masse-% versprüht wird.

3. Verfahren nach Anspruch 2, dadurch gekennzeichnet, daß eine Bettemperatur zwischen 95 und 115°C angewendet wird.

4. Verfahren nach einem der Ansprüche 1—3, dadurch gekennzeichnet, daß eine Ammoniumnitrat enthaltende Schmelze mit einem Wassergehalt von höchstens 1 Masse-% versprüht und eine Bettemperatur zwischen 100 und 110°C angewendet wird.

5. Verfahren nach Anspruch 1, dadurch gekennzeichnet, daß eine Ammoniumnitrat enthaltende Lösung mit einem Wassergehalt von mehr als 5 Masse-% versprüht und eine Bettemperatur von über 115°C angewendet wird.

6. Verfahren nach Anspruch 5, dadurch gekennzeichnet, daß eine Lösung mit einem Wassergehalt von 5—10 Masse-% eingesetzt und eine Bettemperatur von 120—140°C angewendet wird.

7. Verfahren nach einem der Ansprüche 1—6, dadurch gekennzeichnet, daß ein Siliciumdioxid enthaltender Ton mit einer Teilchengröße von weniger als 10 μm verwendet wird.

8. Verfahren nach einem der Ansprüche 1—7, dadurch gekennzeichnet, daß eine Ammoniumnitrat enthaltende flüssige Zusammensetzung eingesetzt wird, welche 0,5—1,0 Masse-% Calciumnitrat und 1,5—2,5 Masse-% Siliciumdioxid enthaltendes Material, bezogen auf die Menge an Ammoniumnitrat, enthält.

9. Verfahren nach einem der Ansprüche 1—8, dadurch gekennzeichnet, daß eine Ammoniumnitrat enthaltende flüssige Zusammensetzung mit einer um mindestens 5°C höheren Temperatur als die Kristallisationstemperatur versprüht wird.

10. Verfahren nach einem der Ansprüche 1—9, dadurch gekennzeichnet, daß das Bett mit Luft, die das Bett vom Boden bis zum oberen Ende mit einer Oberflächengeschwindigkeit, die etwa das Zweifache der Mindestfluidisierungsgesch-windigkeit beträgt, durchströmt, im Wirbelzu-stand gehalten wird.

11. Verfahren nach einem der Ansprüche 1—10, dadurch gekennzeichnet, daß die Ammoniumnitrat enthaltende flüssige Zusammensetzung in das Bett der Keimteilchen mittels eines Luftstromes eingesprüht wird, dessen Temperatur ungefähr gleich derjenigen der Zusammensetzung ist, und daß ein Masseverhältnis von Luft zu flüssiger Zusammensetzung zwischen 1:1 und 1:4 angewendet wird.

12. Verfahren nach einem der Ansprüche 1—11, dadurch gekennzeichnet, daß die aus dem Bett ausgetragenen Granulatkörner, gegebenenfalls nach dem Sieben, rasch abgekühlt werden.

13. Verfahren nach Anspruch 12, dadurch gekennzeichnet, daß die Kühlung in einem oder mehreren Wirbelbettkühlern vorgenommen wird.

14. Verfahren nach Anspruch 13, dadurch gekennzeichnet, daß das aus dem Wirbelbettkühler austretende Gas zumindest zum Teil als Gasstrom in dem Bett der Keimteilchen verwendet wird.

15. Verfahren nach einem der Ansprüche 1—14, dadurch · gekennzeichnet, · daß · die · zu versprühende Ammoniumnitrat enthaltende flüssige Zusammensetzung einen oder mehrere Füllstoffe, Spurenelemente, Agrarchemikalien und/oder Düngersalze enthält.

**Revendications**

1. Procédé pour la préparation de granules contenant du nitrate d'ammonium, thermiquement stables et de haute densité en vrac, à base d'une composition liquide contenant un agent stabilisant et du nitrate d'ammonium, ce procédé étant caractérisé en ce qu'une composition liquide contenant du nitrate d'ammonium comprenant au plus 15% en poids d'eau, 0,3—3,5% en poids de nitrate de calcium et 0,5—5% en poids d'une matière finement divisée qui contient de la silice et est insoluble dans le nitrate d'ammonium et chimiquement inerte vis-à-vis du nitrate d'ammonium, calculé par rapport à la quantité de nitrate d'ammonium, est pulvérisée dans un lit fluidisé de particules en grains contenant du nitrate d'ammonium qui sont maintenues séparées les unes des autres et sont amenées en contact avec un courant de gaz et qui ont une température comprise entre 95 et 145°C, après quoi les granules résultants sont déchargés du lit.

2. Procédé selon la revendication 1, caractérisé en ce que l'on pulvérise une matière en fusion contenant du nitrate d'ammonium contenant au plus 3% en poids d'eau.

3. Procédé selon la revendication 2, caractérisé en ce que l'on applique une température du lit comprise entre 95 et 115°C.

4. Procédé selon l'une quelconque des revendications 1 à 3, caractérisé en ce que l'on pulvérise une matière en fusion contenant du nitrate d'ammonium contenant au plus 1% en poids d'eau et que l'on applique une température du lit comprise entre 100 et 110°C.

5. Procédé selon la revendication 1, caractérisé en ce que l'on pulvérise une solution contenant du nitrate d'ammonium contenant plus de 5% en poids d'eau et que l'on applique une température du lit supérieure à 115°C.

6. Procédé selon la revendication 5, caractérisé en ce que l'on applique une solution contenant 5—10% en poids d'eau et une température du lit de 120—140°C.

7. Procédé selon l'une quelconque des revendications 1 à 6, caractérisé en ce que l'on utilise un argile siliceux dont la grosseur des particules est inférieure à 10 µm.

8. Procédé selon l'une quelconque des revendications 1 à 7, caractérisé en ce que l'on utilise une composition liquide contenant du nitrate d'ammonium qui contient 0,5—1,0% en poids de nitrate de calcium et 1,5—2,5% en poids de matériau siliceux, calculé par rapport à la quantité de nitrate d'ammonium.

9. Procédé selon l'une quelconque des revendications 1 à 8, caractérisé en ce que l'on pulvérise une composition liquide contenant du nitrate d'ammonium, à une température au moins supérieure de 5°C à la température de cristallisation.

10. Procédé selon l'une quelconque des revendications 1 à 9, caractérisé en ce que le lit est fluidisé avec de l'air qui passe à travers le lit de bas en haut avec une vitesse superficielle qui est approximativement double de la vitesse de fluidisation maximale.

11. Procédé selon l'une quelconque des revendications 1 à 10, caractérisé en ce que l'on pulvérise une composition liquide contenant du nitrate d'ammonium, dans le lit de particules en grains au moyen d'un courant d'air qui a une température sensiblement égale à celle de la composition, et en ce que l'on utilise un rapport massique air:composition liquide compris entre 1:1 et 1:4.

12. Procédé selon l'une quelconque des revendications 1 à 11, caractérisé en ce que les particules déchargées du lit sont rapidement refroidies, le cas échéant après tamisage.

13. Procédé selon la revendication 12, caractérisé en ce que l'on effectue le refroidissement dans un ou plusieurs réfrigérants à lit fluidisé.

14. Procédé selon la revendication 13, caractérisé en ce que le gaz sortant du réfrigérant à lit fluidisé est au moins partiellement utilisé comme courant de gaz dans le lit de particules en grains.

15. Procédé selon l'une quelconque des revendications 1 à 14, caractérisé en ce que la composition liquide contenant du nitrate d'ammonium, destinée à être pulvérisée, contient également un ou plusieurs constituants choisis parmi des charges, des éléments à l'état de traces, des produits agrochimiques et/ou des sels d'engrais.